# EUROPÄISCHE PATENTSCHRIFT

(11) **EP 3 366 489 B1**
(45) Veröffentlichungstag und Bekanntmachung des Hinweises auf die Patenterteilung: **19.02.2020**
(21) Anmeldenummer: 18157334.6
(22) Anmeldetag: 19.02.2018
(51) Int. Cl.: B60B 11/02

(54) **VORRICHTUNG ZUM LÖSBAREN VERBINDEN EINER ZUSATZRADFELGE MIT EINER FAHRZEUGRADFELGE**
DEVICE FOR THE REVERSIBLE CONNECTION OF AN ADDITIONAL WHEEL RIM WITH A VEHICLE WHEEL RIM
DISPOSITIF DE RACCORDEMENT D'UNE JANTE SUPPLÉMENTAIRE AMOVIBLE AVEC UNE JANTE DE VÉHICULE

(30) Priorität: 23.02.2017 DE 202017101006 U
(43) Veröffentlichungstag der Anmeldung: 29.08.2018
(73) Patentinhaber: Kock und Sohn Räder GmbH, 48496 Hopsten-Schale (DE)
(72) Erfinder: Kock, Manfred, 48496 Hopsten-Schale (DE)
(74) Vertreter: Linnemann, Winfried

(56) Entgegenhaltungen:
- EP-A1- 0 854 791
- EP-A2- 0 049 420
- DE-A1- 10 352 331
- US-A- 4 030 753

## Beschreibung

Die Erfindung betrifft eine Vorrichtung zum lösbaren Verbinden einer Zusatzradfelge mit einer Fahrzeugradfelge, insbesondere eines landwirtschaftlichen Nutzfahrzeugs, wobei die Vorrichtung einen Distanzring und wenigstens zwei Spannelemente mit je einer Spannstange umfasst, wobei an der Fahrzeugradfelge mindestens zwei Befestigungselemente für je ein erstes, fahrzeugradseitiges Ende jeder Spannstange angeordnet sind und wobei an der Zusatzradfelge Befestigungselemente für je ein zweites, zusatzradseitiges Ende jeder Spannstange vorgesehen sind. Außerdem betrifft die Erfindung ein entsprechend ausgestattetes Fahrzeugrad und ein das Fahrzeugrad aufweisendes Kraftfahrzeug.

Insbesondere landwirtschaftliche Kraft- oder Nutzfahrzeuge, wie Traktoren, Schlepper oder dergleichen, sind mit einer Doppelbereifung beispielsweise an deren Hinterachse ausstattbar. Durch die Zusatzräder wird die Auflagefläche auf einem Untergrund verdoppelt und somit die Flächenbelastung halbiert. Somit werden ein Einsinken in einen weichen Untergrund und/oder eine zu große Bodenverdichtung vermieden.

Um eine Zusatzradfelge mit einer Fahrzeugradfelge lösbar zu verbinden, werden geeignete Vorrichtungen eingesetzt. Damit kann eine Doppelbereifung je nach Erfordernis, wie den Eigenschaften des zu befahrenden Untergrunds, montiert oder demontiert werden.

Eine Vorrichtung der eingangs genannten Art ist aus dem Dokument DE 20 2015 105 678 U1 bekannt. Die Vorrichtung umfasst dabei einen Distanzring, der zwischen der Fahrzeugradfelge und der Zusatzradfelge anzuordnen ist. Die eigentliche Verbindung zwischen Fahrzeugradfelge und Zusatzradfelge erfolgt durch Spannstangen, die mittels Befestigungselementen einerseits an der Fahrzeugradfelge und andererseits an der Zusatzradfelge lösbar festlegbar sind.

Weiterhin offenbart das Dokument DE 103 52 331 A1 eine lösbare Festlegung der Spannstangen mittels eines Kniehebelverschlusses. Für den Verbindungsvorgang muss die Zusatzradfelge, üblicherweise einschließlich des darauf aufgezogenen Reifens, in Umfangsrichtung in eine für die Montage passende Stellung gebracht werden, was bei den hohen Gewichten derartiger Räder schwierig und aufwändig ist.

Das Dokument US 4 030 753 A zeigt eine Doppelrad-Konstruktion, bei der an der Fahrzeugradfelge in festen Umfangsabständen Ösen angebracht sind. In die Ösen sind Hakenschrauben einhakbar. Das andere Ende jeder Hakenschraube ist durch je ein Loch in einem an der Zusatzradfelge angebrachten Lochring mit dicht an dicht angeordneten Löchern geführt und mit einer auf das Gewindeende der Hakenschraube aufgeschraubten Spannmutter ist jede Hakenschraube dann gespannt und gesichert. Die Montage der Hakenschrauben ist hier aufwändig, insbesondere weil jeweils das Gewindeende jeder Spannstange in Spannstangenlängsrichtung in das zugehörige Loch im Lochring eingeführt werden muss, was nur möglich ist, wenn keine Spannmutter an der Spannstange angebracht ist.

Das Dokument US 4 131 323 A zeigt eine Doppelradanordnung für Traktoren. Spannstangen sind hier mit ihrem ersten Ende an der Traktorradfelge in dort angebrachten Halteösen einhakbar. An der Zusatzradfelge sind Laschen mit gebogener Fläche angebracht, die je ein Loch aufweisen, durch welches das zweite Ende der Spannstange verläuft. Mittels eines eine gebogene Oberfläche aufweisenden Zwischenstücks und einer Spannmutter wird die Spannstange gespannt. Durch die gebogene Fläche der Laschen und die eine gebogene Oberfläche aufweisenden Zwischenstücke erhalten die Spannstangen eine begrenzte Schwenkbeweglichkeit um ihr zweites, zusatzradseitiges Ende in Radial- und/oder Umfangsrichtung der Felgen. Hiermit wird ermöglicht, eine Zusatzradfelge einzusetzen, deren Laschen in einer anderen Zahl und Lage vorgesehen sind als die Ösen an der Traktorradfelge. Die Spannstangen können dann leicht schräg, das heißt unter einem gewissen Winkel, zur Achsrichtung von Traktorradfelge und Zusatzradfelge verlaufen. Auch hier ist die Montage der Spannstangen umständlich und aufwändig, weil jede Spannstange über ihre gesamte Länge in Spannstangenlängsrichtung jeweils durch eines der Löcher in den Laschen hindurch von außen her eingeführt werden muss.

Das Dokument US 3 894 774 A zeigt eine Doppelrad-Konstruktion mit einer Fahrzeugradfelge mit Ösen und mit Spannstangen. In der Zusatzradfelge ist radial innen ein Halte- und Führungsring angeordnet, auf dem eine Anzahl von Haltelaschen in Umfangsrichtung der Zusatzradfelge verschiebbar gehalten und geführt ist. Jede Haltelasche ist in gewünschten Positionen in Umfangsrichtung mittels einer Fixierschraube festlegbar, um die Lasche in eine zur zugehörigen Öse an der Fahrzeugradfelge passende Position zu bringen und dann zu fixieren. Weiter hat jede Lasche ein Loch für ein zusatzradseitiges Gewindeende der Spannstangen, die jeweils mittels einer aufgeschraubten Spannmutter gespannt werden. Die zusammenwirkenden Flächen von Haltelasche und Spannmutter können kalottenförmig sein, um einen schrägen Verlauf der Spannstangen zu erlauben. Auch hier müssen die einzelnen Spannstangen mit ihrem Gewindeende in Spannstangenlängsrichtung in die Löcher in den Laschen eingeführt werden, was nur ohne Spannmutter auf dem Gewindeende möglich ist.

Das Dokument US 3 736 029 A zeigt eine Doppelradkonstruktion, bei der an der Fahrzeugradfelge Ösen angebracht sind, in die Spannstangen einhakbar sind. An der Zusatzradfelge ist ein Haltering in einer radialen Ebene angebracht, der eine Vielzahl von kleinen, in Umfangsrichtung beabstandeten Löchern aufweist. Mit dem Haltering sind separate, U-förmige Halter in Eingriff bringbar, wobei jeweils der Halter über den Haltering greift und mit einem Positionierstift in eines der kleinen Löcher im Haltering eingreift. An jedem Halter ist eine Hülse angebracht, durch die ein zusatzradseitiges Gewindeende der Spannstange hindurchführbar ist. Mittels einer dann auf das Gewindeende aufgeschraubten Mutter ist die Spannstange spannbar. Dabei sollen gezielt die Spannstangen und die Halter so angeordnet werden, dass ein Teil der Spannstangen in Vorwärts-Drehrichtung und ein anderer Teil der Spannstangen in Rückwärts-Drehrichtung der Felgen schräg verläuft, um sowohl bei Vorwärtsfahrt als auch bei Rückwärtsfahrt des Fahrzeugs eine gute Spannwirkung zwischen den Felgen zu erzielen. Als nachteilig sind hier die große Zahl der losen Einzelteile und auch wieder die umständliche Montage

Auch Dokument EP0854791B1 offenbart eine Vorrichtung entsprechend dem Oberbegriff des Anspruchs 1.

Für die vorliegende Erfindung stellt sich die Aufgabe, eine Vorrichtung der eingangs genannten Art dahingehend zu verbessern, dass das Ausrichten der Zusatzradfelge relativ zur Fahrzeugradfelge vereinfacht und das Befestigen der Spannstangen an den Felgen erleichtert wird. Weiterhin sollen ein entsprechendes Fahrzeugrad sowie ein damit ausgestattetes Kraftfahrzeug angegeben werden.

Die Lösung des ersten, die Vorrichtung betreffenden Teils dieser Aufgabe gelingt erfindungsgemäß mit einer Vorrichtung der eingangs genannten Art, die dadurch gekennzeichnet ist, dass an der Zusatzradfelge ein Rasterring zum Zusammenwirken mit dem zweiten, zusatzradseitigen Ende der Spannstangen vorgesehen ist, dass am Rasterring in dessen Umfangsrichtung verteilt Befestigungselemente in einer Anzahl vorgesehen sind, die einem Vielfachen der Anzahl der Befestigungselemente an der Fahrzeugradfelge entspricht, und dass am Rasterring mehrere radial nach innen hin offene Aussparungen als Befestigungselemente für das zusatzradseitige Ende der Spannstangen ausgebildet sind.

Der Kerngedanke der Erfindung besteht darin, dass für das Verbinden des einen Endes der Spannstangen, das der Zusatzradfelge zugewandt ist, an der Zusatzradfelge der Rasterring angeordnet ist, der mit mehreren, insbesondere in Umfangsrichtung gleichmäßig äquidistant verteilt angeordneten, Aussparungen ausgebildet ist, mit denen die Spannstangen in Eingriff bringbar sind. In diese Aussparungen kann jeweils eine Spannstange eingehängt und darin lösbar festgelegt werden. An dem Rasterring sind die Aussparungen radial nach innen, also zur Drehachse der Zusatzradfelge gesehen, offen. Somit kann beim Montieren der Vorrichtung jeweils eine Spannstange, die aufgrund des Zusammenwirkens der Kugelschraube mit der Kalottenmutter über eine gewisse räumliche Schwenkbeweglichkeit verfügt, radial von innen nach außen in die Aussparung eingeführt und dort lösbar festgelegt werden. Dabei kann jeweils die Spannmutter schon lose auf das zusatzradseitigen Ende der Spannstange aufgeschraubt sein, ohne dass diese das Einführen der Spannstange in die zugehörige Aussparung behindert. Die Zahl der Aussparungen im Rasterring ist dabei größer als die Zahl der Befestigungselemente an der Fahrzeugradfelge, sodass beim Anbauen der Zusatzradfelge für das Befestigen der Spannelemente der Spannstangen am Rasterring die vorteilhafte Möglichkeit besteht, jeweils die am günstigsten liegenden Aussparungen zu benutzen. Ein aufwändiges und schwieriges Verdrehen der Zusatzradfelge mitsamt dem zugehörigen Reifen ist damit nicht mehr oder nur noch in einem wesentlich geringeren Maße erforderlich.

Der Vorteil der Erfindung besteht darin, dass vor der Montage der Zusatzradfelge die Kugelschrauben an den gewünschten Positionen an der Fahrzeugradfelge lösbar festlegbar sind, also beispielsweise eingeschraubt oder mit einer oder mehreren Muttern festlegbar sind. Nachfolgend wird der Distanzring aufgesetzt und die Spannstangen werden mit ihrer Kalottenmutter an den Kugelschrauben sozusagen eingehängt. Nachfolgend kann die Zusatzradfelge auf den Distanzring aufgesetzt werden und die Spannstangen werden auf die vorstehend beschriebene einfache Art und Weise an dem Rasterring der Zusatzradfelge lösbar festgelegt. Somit kann die Zusatzradfelge praktisch in an sich beliebiger Drehlage relativ zur Fahrzeugradfelge auf diese beziehungsweise den Distanzring aufgesetzt und lösbar festgelegt werden. Ein Verdrehen der Zusatzradfelge relativ zur Fahrzeugradfelge, das üblicherweise einen hohen manuellen Kraftaufwand erfordert, kann somit minimiert werden. Es versteht sich, dass die Zusatzradfelge derart ausgebildet ist, dass ein manueller Durchgriff möglich ist, um die Spannstangen an dem der Zusatzradfelge zugeordneten Rasterring einzuhängen und lösbar festzulegen.

Der Distanzring zwischen Fahrzeugradfelge und Zusatzradfelge, der zur gewünschten Beabstandung der beiden Räder oder Reifen dient, kann entweder als separates, loses Bauteil vorgesehen sein kann oder fest mit der Zusatzradfelge verbunden ausgebildet sein kann. Auch kann der Distanzring teleskopierbar ausgebildet sein.

In weiterer Ausgestaltung ist vorgesehen, dass an der Fahrzeugradfelge mindestens zwei Kugelschrauben mit je einem Kugelkopf angeordnet sind und dass die Spannstangen an ihrem ersten, fahrzeugradseitigen Ende jeweils eine Kalottenmutter zum Zusammenwirken mit je einem Kugelkopf aufweisen. Eine solche Kugelschraube ist in eine entsprechende Ausnehmung, wie Bohrung, in der Fahrzeugradfelge eingesetzt. Dabei kann die Kugelschraube beispielsweise in eine entsprechende Gewindebohrung in der Fahrzeugradfelge eingeschraubt sein oder die Kugelschraube durchgreift die Fahrzeugradfelge und ist mit mindestens einer entsprechenden Mutter an dieser festgelegt. Es kann auch eine Sicherung mit einer zusätzlichen Kontermutter erfolgen. Das der Spannstange zugewandte Ende der Kugelschraube ist kugelkopfförmig ausgebildet, um mit einem kalottenförmigen Ende der Spannstange oder einer an diesem Ende der Spannstange angeordneten Kalottenmutter zusammenzuwirken. Das andere Ende der Spannstange, das der Zusatzradfelge zugewandt ist, kann an dem an der Zusatzradfelge vorhandenen Rasterring lösbar festgelegt werden.

Ebenso kann an dem der Fahrzeugradfelge zugewandten Ende der Spannstange ein Kugelkopf ausgebildet sein und dementsprechend an der vorstehend beschriebenen Kugelschraube eine kalottenförmige Ausnehmung zur Aufnahme des Kugelkopfes der Spannstange vorgesehen sein.

Es ist ersichtlich, dass mindestens zwei, vorzugsweise einander relativ zu einer Drehachse der Fahrzeugradfelge gesehen gegenüberliegende, Spannstangen vorgesehen sind, um eine mechanisch stabile Verbindung zu erhalten.

Sämtliche hier beschriebenen Bauteile oder Komponenten sind vorzugsweise aus einem metallischen Werkstoff, insbesondere Stahl, hergestellt, der beispielsweise auch rostfrei ausgeführt sein kann.

In einer weiteren Ausgestaltung sind mehrere Spannstangen äquidistant in Umfangsrichtung der Fahrzeugradfelge verteilt angeordnet vorgesehen, beispielsweise zwei an einem Umfang der Fahrzeugradfelge einander gegenüberliegende Spannstangen, oder auch drei oder vier Spannstangen für eine mechanische Verbindung mit erhöhter Festigkeit.

Die Kalottenmutter an der Spannstange ist entweder einstückig an dieser ausgebildet oder ein separates Bauteil, das beispielsweise mit entsprechenden Außen- und Innengewinden auf die Spannstange aufgeschraubt ist.

Der Rasterring an der Zusatzradfelge, an dem die Spannstangen lösbar befestigbar sind, ist aus fertigungstechnischen Gründen bevorzugt als separates Bauteil ausgebildet und an der Zusatzradfelge angeschweißt. Alternativ kann der Rasterring einstückig mit der Zusatzradfelge ausgebildet sein.

Es wird weiterhin vorgeschlagen, dass die Anzahl der Aussparungen in dem Rasterring einem ganzzahligen Vielfachen der Anzahl der Spannstangen entspricht. Wenn beispielsweise nur zwei einander gegenüberliegende Spannstangen verwendet werden, der Rasterring aber über zwölf um seinen Umfang äquidistant verteilt angeordnete Aussparungen verfügt, so kann die Zusatzradfelge in praktisch beliebiger Drehlage, relativ zur Fahrzeugradfelge gesehen, auf diese beziehungsweise den Distanzring aufgesetzt werden. Es ist dann höchstens noch ein geringfügiges Verdrehen der Zusatzradfelge notwendig, um diese relativ zu der Fahrzeugradfelge und zu den daran angehängten Spannstangen auszurichten. Dies vermindert den benötigten manuellen Kraftaufwand, erleichtert die Montage und spart Montagezeit.

Zur lösbaren Festlegung der Spannstangen an dem Rasterring der der Zusatzradfelge dient vorzugsweise ein Kniehebelverschluss oder ein Exzenterverschluss. Dieser beispielsweise entsprechend der DE 105 52 331 A1 ausgebildete Verschluss verfügt über ein Spannelement mit einem beispielsweise nockenförmig ausgebildeten Kniehebel, der in seiner Übertotpunktstellung durch Druck- und Zugkräfte lagegesichert ist, womit ein unerwünschtes selbsttätiges Lösen der Verbindung wirkungsvoll vermieden ist.

Zur Betätigung des Kniehebel- oder Exzenterverschlusses ist zweckmäßig an diesem eine Hülse angeordnet, in die ein Spannhebel einführbar ist, um damit den Verschluss manuell mit nicht zu großem Kraftaufwand aus der gelösten Stellung in die arretierte Stellung über einen Übertotpunkt hinaus zu verschwenken.

Zusätzlich kann jedem Kniehebel- oder Exzenterverschluss ein Sicherungsblech oder eine Sicherungsplatte, die zwischen dem Kniehebel- oder Exzenterverschluss und dem Rasterring anzuordnen ist, zugeordnet sein, das/die nach dem Prinzip einer Unterlegscheibe ausgebildet sein kann. Das Sicherungsblech oder die Sicherungsplatte dient zur Vergrößerung der Auflagefläche, womit die mechanischen Belastungen an dem Rasterring beziehungsweise an dem Kniehebel- oder Exzenterverschluss verringert werden.

Zur lagerichtigen Ausrichtung des Sicherungsblechs oder der Sicherungsplatte relativ zum Rasterring gesehen und zur Vermeidung eines selbsttätigen Verschiebens des Sicherungsblechs oder der Sicherungsplatte aus seiner/ihrer Soll-Lage dient ein Spannstift, der an dem Sicherungsblech oder der Sicherungsplatte ausgebildet oder mit diesem/dieser verbunden ist und der mit einer entsprechenden Durchbrechung, die jeder Ausnehmung im Rasterring zugeordnet ist, in Eingriff bringbar ist. Prinzipiell kann dies auch umgekehrt erfolgen, das heißt ein Spannstift am Rasterring wirkt mit einer entsprechenden Durchbrechung am Sicherungsblech oder an der Sicherungsplatte zusammen. Der Sicherungsstift kann jeweils als eigenes Bauteil ausgebildet und mit dem Sicherungsblech oder der Sicherungsplatte fest verbunden, wie verschweißt, sein oder mit dem Sicherungsblech oder der Sicherungsplatte einstückig ausgeführt sein.

Um Maßtoleranzen ausgleichen und die Vorrichtung an unterschiedliche Abstände zwischen Fahrzeugradfelge und Zusatzradfelge anpassen zu können, ist vorgesehen, dass die Spannelemente axial verschieblich auf der jeweils zugehörigen Spannstange geführt und jeweils mit einer axial außen vom Spannelement auf der Spannstange angeordneten Mutter axial abstützbar sind.

Eine weitere Ausgestaltung schlägt vor, dass jedes Sicherungsblech oder jede Sicherungsplatte eine im montierten Zustand das zusatzradseitige Ende der Spannstange aufnehmende Durchbrechung aufweist, welche an ihrer vom Rasterring abgewandten Seite von einer konkav-kugelförmigen Anlagefläche umgeben ist, und dass die auf der Spannstange angeordnete Mutter an ihrer dem Sicherungsblech oder der Sicherungsplatte zugewandten Stirnseite eine zur Anlagefläche des Sicherungsblechs oder der Sicherungsplatte gegengleiche, im montierten Zustand an der Anlagefläche des Sicherungsblechs oder der Sicherungsplatte anliegende, konvex-kugelförmige Gegen-Anlagefläche aufweist. Hiermit wird innerhalb eines gewissen Winkelbereichs zwischen dem Sicherungsblech oder der Sicherungsplatte einerseits und der Mutter andererseits im montierten Zustand stets eine flächige gegenseitige Anlage gewährleistet, was Verschleiß vermindert und die Sicherheit der Vorrichtung erhöht.

Vorzugsweise wird die vorstehend beschriebene Vorrichtung dazu verwendet, um ein Fahrzeugrad für ein Kraftfahrzeug, insbesondere für ein landwirtschaftliches Nutzfahrzeug, wie Traktor oder Schlepper, zu erhalten, das die eigentliche Fahrzeugradfelge mit Reifen sowie eine Zusatzradfelge mit zugehörigem Reifen umfasst, die mit der Vorrichtung miteinander lösbar verbunden sind.

Weiterhin wird ein Kraftfahrzeug angegeben, das ein vorstehend beschriebenes Fahrzeugrad umfasst. Ein solches Kraftfahrzeug kann mittels der Vorrichtung mit Zusatz- oder Zwillingsrädern an einer oder beiden Achse ausgestattet werden, um beispielsweise beim Befahren eines weichen Untergrunds ein Einsinken des Kraftfahrzeugs und/oder eine unerwünschte Bodenverdichtung, wie bei Ackerflächen, zu vermeiden.

Im Folgenden werden Ausführungsbeispiele der Vorrichtung anhand einer Zeichnung näher erläutert. Die Figuren der Zeichnung zeigen:
- Figur 1: einen Querschnitt der Vorrichtung,
- Figur 2: eine perspektivische Ansicht der Vorrichtung,
- Figur 3: eine Draufsicht auf die Vorrichtung,
- Figur 4: einen weiteren Querschnitt der Vorrichtung,
- Figur 5: eine teilweise Explosionsdarstellung der Vorrichtung und
- Figur 6: eine Sicherungsplatte und eine damit zusammenwirkende Mutter in abgewandelter Ausführung als Teile der Vorrichtung.

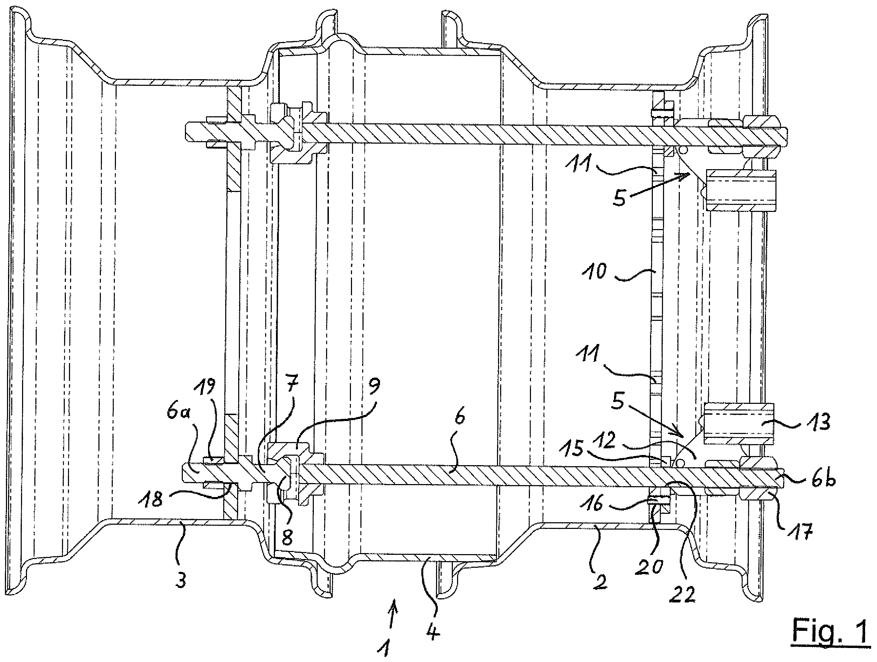

In den Figuren 1 bis 5 ist jeweils eine Vorrichtung 1 abgebildet, mit der eine Zusatzradfelge 2 an einer Fahrzeugradfelge 3 lösbar befestigbar ist. Dabei bezeichnen in den verschiedenen Zeichnungsfiguren die gleichen Bezugszeichen jeweils die gleichen Bauteile oder Komponenten.

Durch die Zusatzradfelge 2 und deren Reifen, der zur Vereinfachung der Darstellung hier nicht dargestellt ist, wird eine Auflagefläche beispielsweise eines landwirtschaftlichen Nutzfahrzeugs, wie Traktor oder Schlepper, erhöht, so dass ein Einsinken in einen weichen Untergrund vermieden werden kann.

Aus der Darstellung in Figur 1 ist ersichtlich, dass zwischen Zusatzradfelge 2 und Fahrzeugradfelge 3 ein Distanzring 4 vorgesehen ist, um eine gewünschte Beabstandung zwischen den jeweiligen Rädern oder Reifen zu erhalten. Zur lösbaren Verbindung zwischen Zusatzradfelge 2 und der Fahrzeugradfelge 3 dienen mindestens zwei Spannstangen 6, die den Distanzring 4 durchgreifen und mittels jeweils eines Spannelements 5 an der Zusatzradfelge 2 festlegbar sind.

Zur lösbaren Befestigung der Spannstangen 6 an der Fahrzeugradfelge 3 dienen Kugelschrauben 7 mit einem Kugelkopf 8, die in eine entsprechende Ausnehmung 18 in der Fahrzeugradfelge 3 eingeschraubt sind oder die Ausnehmung 18 durchgreifen und mit einer oder mehreren Muttern 19 lösbar festgelegt sind.

Die Spannstangen 6 durchgreifen den Distanzring 4 und sind an der Zusatzradfelge 2 mittels je eines Spannelements 5 lösbar festgelegt. Hierzu dient ein an der Zusatzradfelge 2 vorgesehener Rasterring 10, der entweder einstückig mit der Zusatzradfelge 2 ausgebildet oder an dieser angeschweißt ist. In dem Rasterring 10 sind mehrere radial nach innen offene Aussparungen 11 ausgebildet, mit denen die Spannstangen 6 in Eingriff bringbar sind. Dabei ist die Zahl der Aussparungen 11 größer als die Zahl der Spannstangen 6, sodass bei der Montage der Zusatzradfelge 2 jeweils die für das Anbringen der Spannstangen 6 am günstigsten liegenden Aussparungen 11 benutzt werden können.

An jeder Spannstange 6 ist an einem ersten Ende 6a eine Kalottenmutter 9 angeordnet, die eine kalottenförmige Ausnehmung zum Zusammenwirken mit dem Kugelkopf 8 der Kugelschraube 7 aufweist. Somit kann die Spannstange 6 an der Kugelschraube 7 eingehängt werden, indem die Kalottenmutter 9 durch eine seitliche Bewegung der Spannstange 6 in Eingriff mit dem Kugelkopf 8 gebracht wird, um so eine Zugkräfte übertragende Verbindung zu bilden. Prinzipiell ist auch eine umgekehrte Ausgestaltung möglich, das heißt, dass an der Schraube 7 eine kalottenförmige Ausnehmung ausgebildet ist und am ersten Ende 6a der Spannstange 6 ein Kugelkopf. Weiterhin kann die Kalottenmutter 9 als separates Bauteil ausgebildet sein, das beispielsweise auf die Spannstange 6 aufgeschraubt wird, oder einstückig oder fest verbunden, wie verschweißt, mit dieser ausgebildet sein.

Das Spannelement 5 umfasst einen Kniehebel- oder Exzenterverschluss und wirkt mit einem zweiten, zusatzradseitigen Ende 6b der Spannstange 6 zusammen. Hierzu kann das Spannelement 5 beispielsweise auf das zweite Ende 6b der Spannstange 6 aufgeschraubt sein. Alternativ kann das Spannelement 5 axial verschieblich auf der Spannstange 6 geführt und durch eine axial außen vom Spannelement 5 auf der mit einem Gewinde ausgeführten Spannstange 6 gesichert sein. Zur Betätigung des Spannelements 5 dient eine am Spannelement 5 angeordnete Hülse 13, in die ein Spannhebel 14 einführbar ist, um den Kniehebelverschluss 12 oder Exzenterverschluss, der beispielsweise nockenförmig ausgebildet ist, über seinen Übertotpunkt hinaus manuell ohne zu großen Kraftaufwand in eine arretierte Stellung zu verschwenken bzw. bei Demontage der Zusatzradfelge 2 daraus zu lösen.

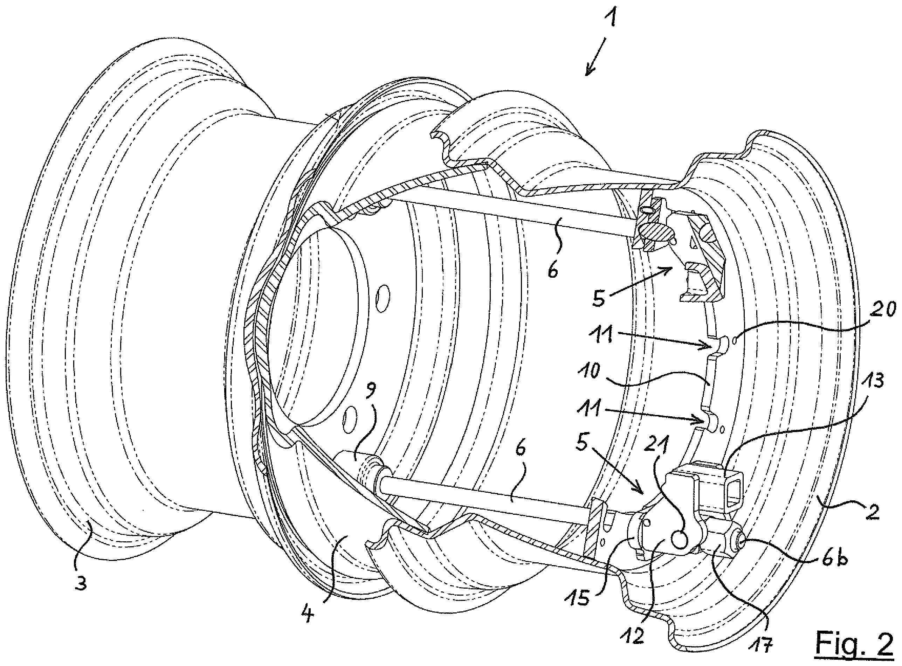

Aus der Figur 2 ist ersichtlich, dass beispielsweise zwei Spannstangen 6 zur Befestigung der Zusatzradfelge 2 an der Fahrzeugradfelge 3 vorgesehen sind, die in Umfangsrichtung der Fahrzeugradfelge 3 gesehen einander gegenüberliegen. Zwischen Fahrzeugradfelge 3 und Zusatzradfelge 2 ist der Distanzring 4 angeordnet. Die Spannstangen 6 mit den Spannelementen 5 wirken mit dem Rasterring 10 zusammen, der entweder einstückig mit der Zusatzradfelge 2 ausgeführt ist oder an die Zusatzradfelge 2 angeschweißt ist und in einer radialen Ebene liegt.

In dem Rasterring 10 sind die Aussparungen 11 ausgebildet, in die die Spannstangen 6 von radial innen nach außen einführbar sind. Bei der Montage der Vorrichtung 1 beziehungsweise der Zusatzradfelge 2 an der Fahrzeugradfelge 3 werden zunächst die Spannstangen 6 mit ihren Kalottenmuttern 9 an den Kugelschrauben 7 der Fahrzeugradfelge 3 eingehängt, dann wird der Distanzring 4 aufgesetzt und nachfolgend die Zusatzradfelge 2 angesetzt und fixiert. Die Zusatzradfelge 2 ist derart ausgebildet, dass ein Durchgriff von außen auf die Spannstangen 6 und Spannelemente 5 möglich ist.

An dem Rasterring 10 sind die Aussparungen 11 insbesondere in einer Anzahl angeordnet, die ein ganzzahliges Vielfaches der Anzahl der verwendeten Spannstangen 6 ist. Somit kann die Zusatzradfelge 2 in beliebiger Drehlage aufgesetzt werden und muss höchstens noch um wenige Winkelgrade verdreht werden, um die für das Anbringen der Spannelemente 5 konkret benötigten Aussparungen 11 im Rasterring 10 in eine zu den Spannstangen 6 passende Position zubringen. Beispielsweise können für zwei Spannstangen 6 insgesamt zwölf Aussparungen 11 an dem Rasterring 10 vorgesehen sein.

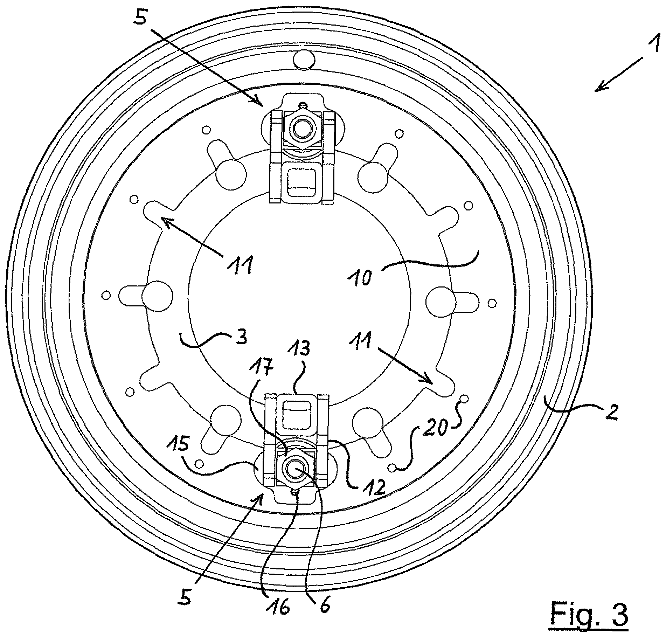

Aus der Darstellung in Figur 3 ist ersichtlich, dass an dem Rasterring 10 die radial nach innen offene Aussparungen 11 ausgebildet sind, die eine dem Außendurchmesser der Spannstangen 6 zuzüglich eines nötigen Bewegungsspiels aufweisende Weite und ein entsprechend dem Durchmesser der Spannstangen 6 ausgerundetes radial inneres Ende haben. Am Übergang zum Innenumfang des Rasterrings 10 können die Aussparungen 11 abgerundet oder erweitert sein, um ein Einführen der Spannstangen 6 zu erleichtern.

Weiterhin ist für jedes Spannelement 5 ein Sicherungsblech oder eine Sicherungsplatte 15 vorgesehen, das/die nach dem Prinzip einer Unterlegscheibe zwischen dem Rasterring 10 und dem Spannelement 5 angeordnet ist. Somit wird eine Auflagefläche erhöht und eine mechanische Belastung vermindert. In dem Sicherungsblech oder der Sicherungsplatte 15 ist jeweils eine entsprechende Durchbrechung 22 für eine Spannstange 6 vorgesehen. An dem Spannelement 5 ist die Hülse 13 angebracht, um mittels eines lösbar einsteckbaren Spannhebels 14 das Spannelement 5 zu betätigen.

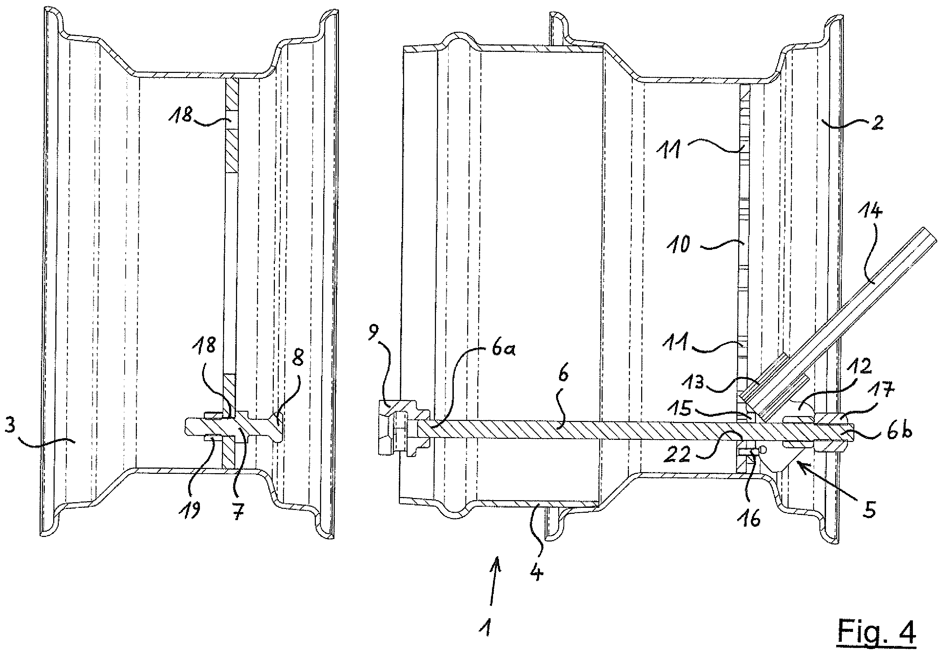

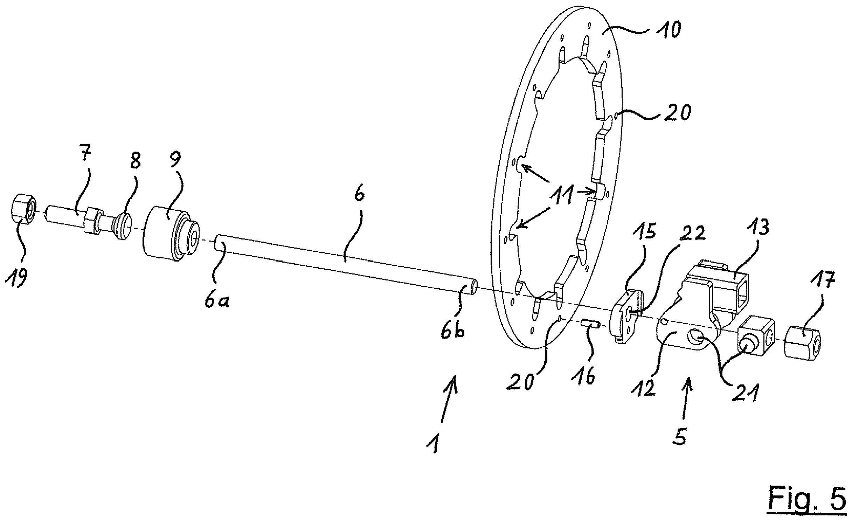

Weiterhin sind an dem Rasterring 10 Durchbrechungen 20 vorgesehen, die jeweils radial innen von den Aussparungen 11 liegen. In die Durchbrechungen 20 ist ein einen Teil des Sicherungsblechs oder der Sicherungsplatte 15 bildender Sicherungsstift 16 einführbar, der in den Figuren 4 und 5 abgebildet ist. Mittels des Sicherungsstifts 16 kann das Sicherungsblech oder die Sicherungsplatte 15 lagerichtig an dem Rasterring 10 angeordnet und in seiner/ihrer Lage gesichert werden. Dabei kann der Sicherungsstift 16 als separates Bauteil oder, was bevorzugt ist, einstückig oder fest verbunden mit dem Sicherungsblech 15 ausgebildet sein.

In Figur 5 sind die einzelnen Komponenten der Vorrichtung 1 in Form einer Explosionsdarstellung abgebildet. Die Spannstange 6, die als Gewindestange ausgebildet sein kann, ist an einem ersten Ende 6a mit der Kalottenmutter 9 ausgestattet, die mit der Kugelschraube 7 mit Kugelkopf 8 zusammenwirkt. Die Kugelschraube 7 ist an einer hier nicht abgebildeten Fahrzeugradfelge 3 mittels einer Mutter 19 lösbar festgelegt.

An dem anderen Ende 6b der Spannstange 6 ist das Spannelement 5 angeordnet. Es wird beispielsweise aufgeschraubt oder aufgeschoben und kann mit einer Mutter 17 axial gesichert werden. Das Spannelement 5 umfasst einen Kniehebelverschluss 12 sowie eine Hülse 13, in die ein in Figur 4 gezeigter Spannhebel 14 zur Betätigung einführbar ist.

Zwischen dem Spannelement 5 und dem Rasterring 10, der der Zusatzradfelge 2 zugeordnet ist, kann nach Art einer Unterlegscheibe das Sicherungsblech oder die Sicherungsplatte 15 vorgesehen sein, das/die mittels des in eine der Durchbrechungen 20 im Rasterring 10 eingreifenden Sicherungsstifts 16 lagerichtig ausrichtbar und sicherbar ist. Zum Verschwenken des Spannelements 5 dient ein Schwenklager 21.

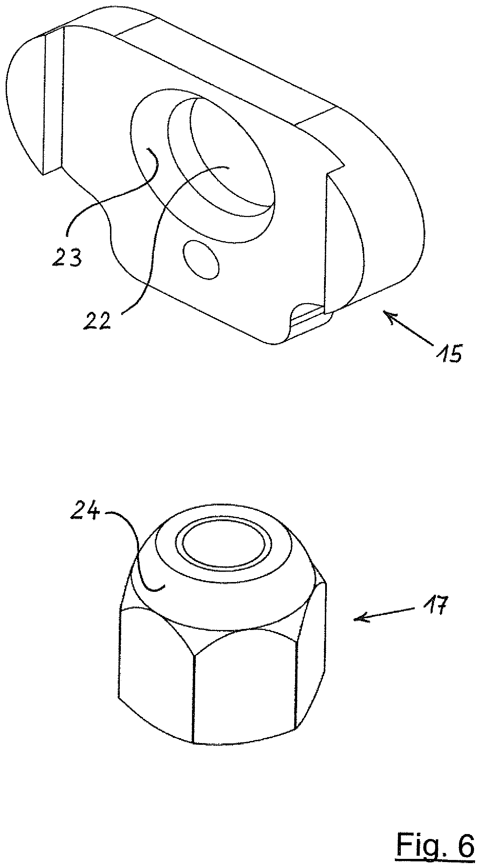

Figur 6 schließlich zeigt eine Sicherungsplatte 15 und eine damit zusammenwirkende Mutter 17 in abgewandelter Ausführung als Teile der Vorrichtung 1. In der Ausführung der Vorrichtung 1 mit der Sicherungsplatte 15 und der Mutter 17 nach Figur 6 liegt im montierten Zustand der Vorrichtung 1 die Mutter 17 unmittelbar an der Sicherungsplatte 15 an. Um auch bei nicht exakt fluchtender Ausrichtung von Sicherungsplatte 15 und Mutter 17 dennoch eine flächige gegenseitige Anlage zu gewährleisten, hat die Sicherungsplatte 15 an ihrer im montierten Zustand das zusatzradseitige Ende der Spannstange aufnehmenden Durchbrechung 22 an deren vom Rasterring abgewandter Seite eine die Durchbrechung 22 umgebende konkavkugelförmige Anlagefläche 23. Die Mutter 17 weist an ihrer der Sicherungsplatte 15 zugewandten Stirnseite eine zur Anlagefläche 23 der Sicherungsplatte 15 gegengleiche, im montierten Zustand an der Anlagefläche 23 der Sicherungsplatte 15 anliegende, konvex-kugelförmige Gegen-Anlagefläche 24 auf. Hiermit wird vorteilhaft ein gewisser Bewegungsspielraum für die Ausrichtung der Spannstangen relativ zur Axialrichtung ermöglicht, ohne dass dabei die Sicherheit der Verbindung leidet.

**Bezugszeichenliste:**

| Zeichen | Bezeichnung |
|---|---|
| 1 | Vorrichtung |
| 2 | Zusatzradfelge |
| 3 | Fahrzeugradfelge |
| 4 | Distanzring |
| 5 | Spannelement |
| 6 | Spannstange |
| 6a | fahrzeugradseitiges Ende von 6 |
| 6b | zusatzradseitiges Ende von 6 |
| 7 | Kugelschraube |
| 8 | Kugelkopf |
| 9 | Kalottenmutter |
| 10 | Rasterring |
| 11 | Aussparungen in 10 |
| 12 | Kniehebelverschluss |
| 13 | Hülse |
| 14 | Spannhebel |
| 15 | Sicherungsblech oder Sicherungsplatte |
| 16 | Sicherungsstift |
| 17 | Mutter zur Sicherung von 5 auf 6 |
| 18 | Ausnehmung in 3 |
| 19 | Mutter zur Sicherung von 7 an 3 |
| 20 | Durchbrechungen für 16 in 10 |
| 21 | Schwenklager in 5 |
| 22 | Durchbrechung in 15 |
| 23 | Anlagefläche an 15 |
| 24 | Gegen-Anlagefläche an 17 |

## Patentansprüche

1. Vorrichtung (1) zum lösbaren Verbinden einer Zusatzradfelge (2) mit einer Fahrzeugradfelge (3), insbesondere eines landwirtschaftlichen Nutzfahrzeugs, wobei die Vorrichtung (1) einen Distanzring (4) und wenigstens zwei Spannelemente (5) mit je einer Spannstange (6) umfasst, wobei an der Fahrzeugradfelge (3) mindestens zwei Befestigungselemente für je ein erstes, fahrzeugradseitiges Ende (6a) jeder Spannstange (6) angeordnet sind und wobei an der Zusatzradfelge (2) Befestigungselemente für je ein zweites, zusatzradseitiges Ende (6b) jeder Spannstange (6) vorgesehen sind, **dadurch gekennzeichnet,**
**dass** an der Zusatzradfelge (2) ein Rasterring (10) zum Zusammenwirken mit dem zweiten, zusatzradseitigen Ende der Spannstangen (6) vorgesehen ist, dass am Rasterring (10) in dessen Umfangsrichtung verteilt Befestigungselemente in einer Anzahl vorgesehen sind, die einem Vielfachen der Anzahl der Befestigungselemente an der Fahrzeugradfelge (3) entspricht, und dass am Rasterring (10) mehrere radial nach innen hin offene Aussparungen (11) als Befestigungselemente für das zusatzradseitige Ende (6b) der Spannstangen (6) ausgebildet sind.

2. Vorrichtung nach Anspruch 1, **dadurch gekennzeichnet, dass** an der Fahrzeugradfelge (3) mindestens zwei Kugelschrauben (7) mit je einem Kugelkopf (8) angeordnet sind und dass die Spannstangen (6) an ihrem ersten, fahrzeugradseitigen Ende (6a) jeweils eine Kalottenmutter (9) zum Zusammenwirken mit je einem Kugelkopf (8) aufweisen.

3. Vorrichtung nach Anspruch 1 oder 2, **dadurch gekennzeichnet, dass** die Kugelschrauben (7) in die Fahrzeugradfelge (3) einschraubbar sind.

4. Vorrichtung nach einem der Ansprüche 1 bis 3, **dadurch gekennzeichnet, dass** mehrere Spannstangen (6) äquidistant in Umfangsrichtung der Fahrzeugradfelge (3) verteilt angeordnet sind.

5. Vorrichtung nach einem der Ansprüche 1 bis 4, **dadurch gekennzeichnet, dass** die Kalottenmutter (9) und die Spannstange (6) einstückig oder miteinander lösbar verbindbar ausgeführt sind.

6. Vorrichtung nach einem der Ansprüche 1 bis 5, **dadurch gekennzeichnet, dass** der Rasterring (10) an der Zusatzradfelge (2) angeschweißt ist.

7. Vorrichtung nach einem der Ansprüche 1 bis 6, **dadurch gekennzeichnet, dass** die Anzahl der Aussparungen (11) in dem Rasterring (10) einem ganzzahligen Vielfachen der Anzahl der Spannstangen (6) entspricht.

8. Vorrichtung nach einem der Ansprüche 1 bis 7, **dadurch gekennzeichnet, dass** die Spannelemente (5), mittels welchen die Spannstangen (6) an dem Rasterring (10) lösbar festlegbar sind, Kniehebel (12) oder Exzenterverschlüsse sind.

9. Vorrichtung nach Anspruch 8, **dadurch gekennzeichnet, dass** an jedem Kniehebel (12) oder Exzenterverschluss eine Hülse (13) für einen lösbar einsteckbaren Spannhebel (14) vorgesehen ist.

10. Vorrichtung nach Anspruch 8 oder 9, **dadurch gekennzeichnet, dass** jedem Kniehebelverschluss (12) oder Exzenterverschluss ein(e) zwischen diesem und dem Rasterring (10) anzuordnende(s) Sicherungsblech oder Sicherungsplatte (15) zugeordnet ist.

11. Vorrichtung nach Anspruch 10, **dadurch gekennzeichnet, dass** jedes Sicherungsblech oder jede Sicherungsplatte (15) einen Sicherungsstift (16) aufweist, der in eine jeder Aussparung (11) zugeordnete Durchbrechung (20) im Rasterring (10) einsteckbar ist.

12. Vorrichtung nach einem der Ansprüche 1 bis 11, **dadurch gekennzeichnet, dass** die Spannelemente (5) axial verschieblich auf der jeweils zugehörigen Spannstange (6) geführt und jeweils mit einer axial außen vom Spannelement (5) auf der Spannstange (6) angeordneten Mutter (17) axial abstützbar sind.

13. Vorrichtung nach Anspruch 10 oder 11 und nach Anspruch 12, **dadurch gekennzeichnet, dass** jedes Sicherungsblech oder jede Sicherungsplatte (15) eine im montierten Zustand das zusatzradseitige Ende (6b) der Spannstange (6) aufnehmende Durchbrechung (22) aufweist, welche an ihrer vom Rasterring (10) abgewandten Seite von einer konkav-kugelförmigen Anlagefläche (23) umgeben ist, und dass die auf der Spannstange (6) angeordnete Mutter (17) an ihrer dem Sicherungsblech oder der Sicherungsplatte (15) zugewandten Stirnseite eine zur Anlagefläche (23) des Sicherungsblechs oder der Sicherungsplatte (15) gegengleiche, im montierten Zustand an der Anlagefläche (23) des Sicherungsblechs oder der Sicherungsplatte (15) anliegende, konvex-kugelförmige Gegen-Anlagefläche (24) aufweist.

14. Fahrzeugrad eines Kraftfahrzeugs, insbesondere landwirtschaftliches Nutzfahrzeug, umfassend eine Fahrzeugradfelge (3) und eine Zusatzradfelge (2), die mit einer Vorrichtung (1) nach einem der Ansprüche 1 bis 13 miteinander verbunden sind.

15. Kraftfahrzeug, insbesondere landwirtschaftliches Nutzfahrzeug, umfassend ein Fahrzeugrad nach Anspruch 14.

## Claims

1. Device (1) for the reversible connection of an additional wheel rim (2) to a vehicle wheel rim (3), particularly one belonging to an agricultural vehicle, wherein the device (1) includes a spacing ring (4) and at least two clamping elements (5) with one tie rod (6) each, wherein at least two fixing elements for a respective first, vehicle-wheel-side end (6a) of each tie rod (6) are arranged on the vehicle wheel rim (3), and wherein fixing elements for a respective second, additional-wheel-side end (6b) of each tie rod (6) are provided on the additional wheel rim (2),
**characterised in**
**that** a notched ring (10) is provided on the additional wheel rim (2) to interact with the second, additional-wheel-side end of the tie rod (6), that fixing elements distributed along the periphery of the notched ring (10) are provided in a quantity corresponding to a multiple of the number of fixing elements on the vehicle wheel rim (3), and that a plurality of radially inwardly open recesses (11) are provided on the notched ring (10) as fixing elements for the additional-wheel-side end (6b) of the tie rod (6).

2. The device according to Claim 1, **characterised in that** at least two ball screws (7), each with a spherical head (8), are arranged on the vehicle wheel rim (3) and that the tie rods (6) each have a domed nut (9) on their first, vehicle-wheel-side end (6a) to interact with one spherical head (8) each.

3. The device according to Claim 1 or 2, **characterized in that** the ball screws (7) are adapted to be screwed into the vehicle wheel rim (3).

4. The device according to one of Claims 1 to 3, **characterized in that** several tie rods (6) are spaced evenly apart in the circumferential direction of the vehicle wheel rim (3).

5. The device according to one of Claims 1 to 4, **characterized in that** the domed nut (9) and the tie rod (6) are designed integral or reversibly connected to one another.

6. The device according to one of Claims 1 to 5, **characterized in that** the notched ring (10) is welded onto the additional wheel rim (2).

7. The device according to one of Claims 1 to 6, **characterized in that** the number of recesses (11) in the notched ring (10) corresponds to a whole-number multiple of the number of tie rods (6).

8. The device according to one of Claims 1 to 7, **characterized in that** the clamping elements (5) by means of which the tie rings (6) are releasably fixable to the notched ring (10) are knee levers (12) or eccentric closures.

9. The device according to Claim 8, **characterised in that** a sleeve (13) is provided on each knee lever (12) or eccentric closure for a releasably insertable clamping lever (14).

10. The device according to Claim 8 or 9, **characterised in that** a locking sheet or plate (15) to be arranged between the knee lever closure (12) or eccentric closure and the notched ring (10) is associated with each knee lever closure (12) or eccentric closure.

11. The device according to Claim 10, **characterized in that** each locking sheet or each locking plate (15) has a locking pin (16) insertable into a through hole (20) in the notched ring (10), which through hole (20) is associated with each recess (11).

12. The device according to Claims 1 to 11, **characterised in that** the clamping elements (5) are axially movably guided on the respective associated tie rod (6) and are supportable by a nut (17) arranged on the tie rod (6) axially outwards from the clamping element (5).

13. The device according to Claim 10 or 11 and according to Claim 12, **characterised in that** each locking sheet or plate (15) has a through hole (22) accommodating the additional-wheel-side end (6b) of the tie rod (6) when installed, with the through hole being surrounded on its side facing away from the notched ring (10) by a concave-spherical contact surface (23), and that the nut (17) on the tie rod (6) has on its end surface facing the locking sheet or plate (15) a convex-spherical counter-contact surface (24) that mirrors the contact surface (23) of the locking sheet or plate (15) and when mounted abuts the contact surface (23) of the locking sheet or plate (15).

14. Wheel of a motor vehicle, particularly an agricultural vehicle, including a vehicle wheel rim (3) and an additional wheel rim (2) interconnected by a device (1) according to one of Claims 1 to 13.

15. Motor vehicle, particularly an agricultural vehicle, including a vehicle wheel according to Claim 14.

## Revendications

1. Dispositif (1) de liaison détachable d'une jante supplémentaire (2) à une jante de véhicule (3), notamment d'un véhicule utilitaire agricole, ledit dispositif (1) comprenant une rondelle d'écartement (4) et au moins deux éléments de tension (5) dotés chacun d'une tige de tension (6), au moins deux éléments de fixation étant agencés sur la jante de véhicule (3) pour respectivement une première extrémité (6a), du côté de la roue du véhicule, de chaque tige de tension (6), et des éléments de fixation étant prévus sur la jante supplémentaire (2) pour respectivement une deuxième extrémité (6b), du côté de la roue de véhicule, de chaque tige de tension (6),
**caractérisé en ce**
**qu'**est prévu, sur la jante supplémentaire (2), un anneau d'emboîtage (10) destiné à coopérer avec la deuxième extrémité, du côté de la roue supplémentaire, des tiges de tension (6), que sur ledit anneau d'emboîtage (10) des éléments de fixation sont prévus répartis dans le sens de la circonférence dudit anneau dans un nombre qui correspond à un multiple du nombre des éléments de fixation sur la jante de véhicule (3), et que sur ledit anneau d'emboîtage (10) plusieurs évidements (11) dans le sens radial ouverts vers l'intérieur sont formés en tant qu'éléments de fixation pour l'extrémité (6b), du côté de la roue supplémentaire, des tiges de tension (6).

2. Dispositif selon la revendication 1, **caractérisé en ce que** sont agencées sur la jante de véhicule (3) au moins deux vis à billes (7) dotées chacune d'une tête en bille (8) et que les tiges de tension (6) présentent respectivement sur leur première extrémité du côté de la roue de véhicule (6a) un écrou à calotte (9) destiné à coopérer avec respectivement une tête en bille (8).

3. Dispositif selon la revendication 1 ou 2, **caractérisé en ce que** les vis à billes (7) peuvent être vissées dans la jante de véhicule (3).

4. Dispositif selon l'une quelconque des revendications 1 à 3, **caractérisé en ce que** plusieurs tiges de tension (6) sont agencées réparties de manière équidistante dans le sens de la circonférence de la jante de véhicule (3).

5. Dispositif selon l'une quelconque des revendications 1 à 4, **caractérisé en ce que** l'écrou à calotte (9) et la tige de tension (6) sont réalisés d'un seul tenant ou pouvant être reliés l'un à l'autre par liaison détachable.

6. Dispositif selon l'une quelconque des revendications 1 à 5, **caractérisé en ce que** l'anneau d'emboîtage (10) est soudé sur la jante supplémentaire (2).

7. Dispositif selon l'une quelconque des revendications 1 à 6, **caractérisé en ce que** le nombre des évidements (11) dans l'anneau d'emboîtage (10) correspond à un multiple entier du nombre de tiges de tension (6).

8. Dispositif selon l'une quelconque des revendications 1 à 7, **caractérisé en ce que** les éléments de tension (5), au moyen desquels les tiges de tension (6) peuvent être fixées à l'anneau d'emboîtage (10) de manière détachable, sont des leviers basculants (12) ou des fermetures excentriques.

9. Dispositif selon la revendication 8, **caractérisé en ce qu'**une douille (13) pour un levier de verrouillage (14) insérable de manière détachable est prévue sur chaque levier basculant (12) ou fermeture excentrique.

10. Dispositif selon la revendication 8 ou 9, **caractérisé en ce qu'**une tôle de sûreté ou une plaque de sûreté (15) est associée à chaque fermeture de levier basculant (12) ou fermeture excentrique à agencer entre ladite fermeture et l'anneau d'emboîtage (10).

11. Dispositif selon la revendication 10, **caractérisé en ce que** chaque tôle de sûreté ou chaque plaque de sûreté (15) présente une goupille de sûreté (16) qui peut être insérée dans une découpure (20) dans l'anneau d'emboîtage (10) qui est associée à chaque évidement (11).

12. Dispositif selon l'une quelconque des revendications 1 à 11, **caractérisé en ce que** les éléments de tension (5) sont réalisés déplaçables dans l'axe sur la tige de tension (6) respective correspondante et peuvent être soutenus dans l'axe respectivement par un écrou (17) agencé axialement à l'extérieur de l'élément de tension (5) sur la tige de tension (6).

13. Dispositif selon la revendication 10 ou 11 et selon la revendication 12, **caractérisé en ce que** chaque tôle de sûreté ou chaque plaque de sûreté (15) présente une découpure (22) accueillant, à l'état monté, l'extrémité, du côté de la roue supplémentaire (6b), de la tige de tension (6), laquelle découpure est entourée, de son côté opposé à l'anneau d'emboîtage (10), d'une surface de contact de forme sphérique-concave (23), et que l'écrou (17) agencé sur la tige de tension (6) présente sur sa face avant tournée vers la tôle de sûreté ou la plaque de sûreté (15) une contre-surface de contact (24) de forme sphérique-convexe complémentaire de la surface de contact (23) de la tôle de sûreté ou de la plaque de sûreté (15), en contact avec la surface de contact (23) de la tôle de sûreté ou de la plaque de sûreté (15) à l'état monté.

14. Roue de véhicule d'un véhicule automobile, notamment d'un véhicule utilitaire agricole, comprenant une jante de véhicule (3) et une jante supplémentaire (2) qui sont reliées l'une à l'autre au moyen d'un dispositif (1) selon l'une quelconque des revendications 1 à 13.

15. Véhicule automobile, notamment véhicule utilitaire agricole, comprenant une roue de véhicule selon la revendication 14.
